(19) Europäisches Patentamt

European Patent Office

Office européen des brevets

(11) Publication number: **0 240 241 B1**

(12) **EUROPEAN PATENT SPECIFICATION**

(45) Date of publication of patent specification: **16.12.92** (51) Int. Cl.⁵: **B60B 21/12**

(21) Application number: **87302611.6**

(22) Date of filing: **26.03.87**

(54) Motorcycle tyre and wheel rim assembly.

(30) Priority: **28.03.86 JP 72055/86**

(43) Date of publication of application:
**07.10.87 Bulletin 87/41**

(45) Publication of the grant of the patent:
**16.12.92 Bulletin 92/51**

(84) Designated Contracting States:
**DE FR IT**

(56) References cited:
**DE-B- 1 062 563**
**FR-A- 2 154 790**
**US-A- 3 008 770**

**PATENT ABSTRACTS OF JAPAN, vol. 10, no. 216 (M-502)[2272], 29th July 1986; & JP-A-61 54 302 (YAMAHA MOTOR CO. LTD) 18-03-1986**

(73) Proprietor: **SUMITOMO RUBBER INDUSTRIES LIMITED**
**No. 1-1, Tsutsui-cho 1-chome**
**Chuo-ku Kobe-shi Hyogo 651(JP)**

(72) Inventor: **Tomoda, Hiroshi**
**3-1-2144 Takahamacho**
**Ashiya-shi Hyogo-ken(JP)**
Inventor: **Kume, Tomohiko**
**kk Takasago Seisakusko 20-1 Higashi Yakuracho 3-ch**
**Kusatsu-shi Shiga-ken(JP)**

(74) Representative: **Stewart, Charles Geoffrey**
**SP TYRES UK LIMITED Tyre Technical Division**
**Fort Dunlop Birmingham B24 9OT(GB)**

## Description

This invention relates to a tyre and wheel rim assembly for motorcycles suitable particularly for use off the road such as on muddy or unpaved roads. The invention also provides a wheel rim which is spoked and suitable for carrying a tubeless tyre.

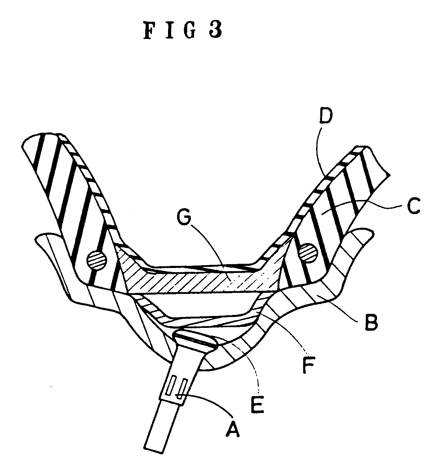

In general a conventional tyre and wheel assembly for motorcycle for off-road use comprises, as shown in Fig.3. a rim B with spokes A and a tyre with tube D. To prevent the tube from being damaged by the spoke nipple E of the spokes A a rim band F is disposed there between. Furthermore, to prevent the tyre bead parts C from slipping off from the bead seats into the rim well when the wheel is used under low pressure, circumferentially spaced part bead stoppers G are inserted between the beads C and C. Accordingly, the tube D contacts directly the rim band F at the portions between the bead stoppers G.

Such conventional assemblies, however, have the following problems:

(a) The tyre tube D is liable to puncture. To avoid this problem it has been proposed to use a tubeless tyre, however, the air in the tyre leaks out through the spoke holes of the rim B because the rim band F has little effect in air sealing, it being purely a protector for the tube.

(b) The tyre tube D is liable to damage when used under low pressure because it is pinched between the tyre bead end the rim at the above mentioned portions between the bead stoppers G.

(c) The bead stoppers G and tyre tube D increase the weight of the wheel; and

(d) The tyre sometimes comes off the rim owing to slipping-off of the bead being liable to occur in the portions between the bead stoppers G, which sometimes puts the rider in danger.

A spoke wheel for a tubeless tyre which seeks to enhance the tightness and improve the seal between the rim band and the inner wall of the well and has most of the features of the preamble to claim 1 is disclosed by JP-A-6154302.

It is therefore, an object of the present invention to provide a tyre and wheel rim for motorcycles in which the tyre is prevented from coming off the rim to provide safe driving and which is applicable to tubeless tyres.

A motorcycle tyre and wheel assembly comprising a tubeless tyre having a pair of bead regions and a wheel rim having complementary bead seats a rim well between the bead seats and a pair of rim flanges wherein there is provided axially inwards of each bead seat of tyre bead retaining means integral with the wheel rim and a circumferentially extending air sealing means comprising a circular main body of rubber material disposed airtightly between the sidewalls characterised by the air sealing means including a backing tape positioned radially inwards of the main body, the backing tape comprising material harder than the main body to provide support therefore.

The air sealing means may be silicone rubber, natural rubber butyl rubber or butadiene rubber.

The backing tape may be a strip of aluminium or steel radially inside the rubber air sealing means.

The sidewalls of the well and the edges of the sealing means may both be at an acute angle to the radial direction to provide a well which becomes narrower radially inwardly. This gives a tapered assembly which provides the most effective air seal.

The tyre bead retaining means, most importantly, is integral with the wheel rim itself. The retaining means may be a bead retaining hump or more preferably a tyre toe engaging groove as well as retaining hump. The latter construction is used with a tyre having a special groove engaging toe, such tyres being known as TD tyres.

An embodiment of the present invention will now be described, by way of example only, in conjunction with the drawings in which:-

Fig.1. is a part sectional view showing a spoked wheel rim according to the present invention

Fig.2. is a part sectional view showing the air inflation valve portion of the wheel of Fig.1. and

Fig.3 is a part sectional view of a wheel according to the prior art.

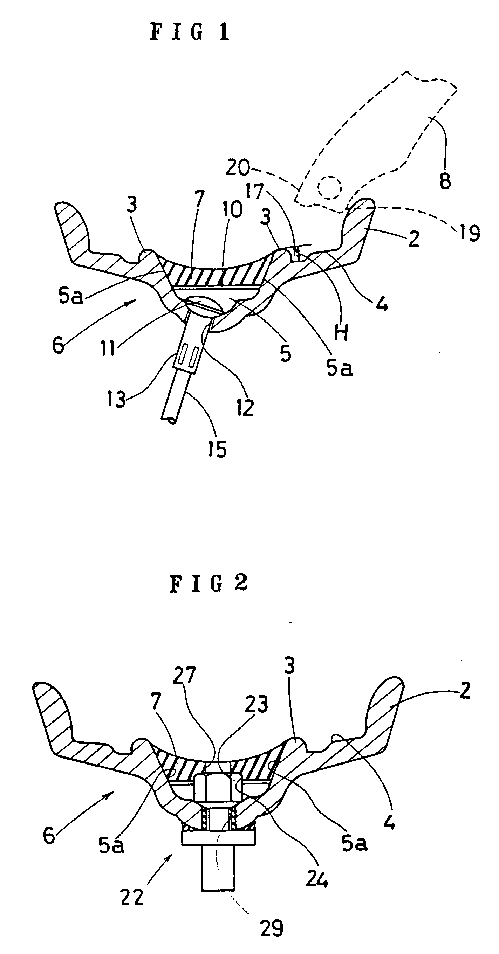

The motorcycle tyre and wheel assembly of Figs. 1 & 2 comprises a wheel rim 6 and a tyre 8 mounted thereon.

The rim 6 comprises a pair of bead seats 4 for the tyre bead portions 19 and a rim well 5 provided between the bead seats 4. The well 5 has a pair of opposite circular side walls 5a one at either side of the well 5.

The rim 6 also comprises a pair of rim flanges 2 extending radially outwardly one each from each axially outer end of the bead seats 4. A circular air-sealing means 7 is disposed airtightly between the opposite circular side walls 5a of the rim well 5 as will be described later.

Each bead seat 4 is provided at its axially inner end with a tyre toe receiving groove 17 and adjacent to the groove 17 a radially outwardly protruding hump 3. The height H of the hump 3 from the base of the groove as shown is in the range of 2 to 5 mm. The humps 3 both extend circumferentially continuously

2

around the wheel rim 6.

The rim well 5 decreases in width with increase in depth, and is provided in its bottom with spoke holes 12 penetrated by spoke nipples 13 of spokes 15, which are tensioned between the wheel rim 5 and the wheel hub by screwing the spoke nipples 13.

The tyre 8 has a pair of bead regions 19 each provided with a reinforcing bead core. Each bead toe of the bead regions 19 is formed as a projection 20, which protrudes radially inwardly. "The projections 20 fit into the grooves 17 of the bead seats 4, respectively. The bead region 19 is substantially the same shape as the bead seat 4 and groove 17 of the wheel rim.

Thus in use of the assembled tyre and wheel rim each bead is retained at the bead seat by the toe 20 in the groove 17 and the hump 3.

The above-mentioned air-sealing means 7 comprises a circular main body made of rubber material and a backing tape 10 provided at the inside of the main body.

The inside diameter of the air-sealing means 7 is set so as to give enough clearance between the head 11 of the spoke nipple 13 and the air-sealing means 7 itself to avoid their direct contact caused by radial movement of the nipple 13 during driving.

The rubber material of the main body may be silicon rubber, natural rubber, butyl rubber and/or butadiene rubber, but in view of its air-sealing effect and heat resistance, it is preferable to use silicon rubber.

The main body decreases in width toward the wheel centre so that both sides of the air-sealing means 7 are fitted airtightly to both side walls 5a of the rim well 5.

The backing tape 10 is made of a material harder than the above mentioned rubber material, such as a thin metal (e.g. aluminium), plastic, hard rubber or the like. The backing tape 10 is preferably wound into the well and extends for slightly more than one turn to give an overlap.

The backing tape 10 prevents the main body from being damaged by any excess movement of the spoke nipple 13 beyond the above-mentioned clearance. The tape 10 also lessens the deformation of the main body caused by air pressure applied to the tyre 8, and this maintains the tight contact with the side walls 5a of the rim well 5. As a result, the air-sealing effect is further improved because deformation of the rubber is resisted.

The main body may be a precured rubber ring which is stretched over the wheel rim flange and then contracts into place over the rigid backing tape. Alternatively the rubber main body may be spread in uncured form onto the pre positioned backing tape. This latter system is particularly useful for a silicon rubber main body as the silicon rubber sets in place to give a cured assembly with the rubber main body in close sealing engagement with the tapered sidewalls of the well.

As shown in Fig.2 in the air inflation valve (22) part of the rim 6, the air-sealing means 7 is provided with an air through hole 27. The outer end of the air through hole 27 opens toward the tyre interior, and the inner end is provided with a larger diameter valve recess 24 into which the valve nut 23 is inserted airtightly so as not to allow air leakage along the outer surface of the valve nut 23. Further more, the gap between the air valve 22 and the rim valve hole 29, through which the screw portion of the valve 22 passes, is bridged with sealant.

Test wheels were fitted on a 500cc motorcycle for motorcross use and driving tests were performed on a severe 1.5 km motocross test circuit course. Wheels according to the invention were fitted with tubeless tyres set out in table 1. The rims were according to Table 2. Control wheels were also tested which were conventional tubed tyres of Table 1 and conventional rims according to Table 2 and Fig.3. Test results are shown in Table 2.

TABLE 1

| | Front | Rear |
|---|---|---|
| Tyre Size | 80/100-21 | 120/100-18 |
| Carcass: | | |
| Cord material | Polyester | Polyester |
| Ply number | 3 | 3 |
| Cord angle ( ) | 32 | 32 |
| Tread rubber | SBR | SBR |
| JIS hardness | 75 | 75 |
| Bead outline | Fig.1 | Fig.1 |
| Weight (g) | 3800 | 5800 |

TABLE 2

| | Control (with tube) Front | Rear | Invention (tubeless) Front | Rear |
|---|---|---|---|---|
| Rim size | WM 1.60X21 | MT 2.75X18 | TD 1.85X21 | TD 2.75X18 |
| Height of hump | 0 | 0 | 4 mm | 3 mm |
| Air-sealing | --- | --- | silicon rubber | |
| ight | | | | |
| Rim | 1800 | 2100 | 2000 | 2300 |
| Tyre | 3800 | 5800 | 3800 | 5800 |
| Tube | 500 | 1000 | 0 | 0 |
| Bead stopper | 70 | 180 | 0 | 0 |
| Total | 6170 g | 9080 g | 5800 g | 8100 g |
| Air leak and Ride quality | | | | |
| 0.8 Kg/cm | | | | |
| Air leak | N | N | N | N |
| Ride quality | 100 | 100 | 110 | 120 |
| 0.5 Kg.cm | | | | |
| Air leak | Y | N | N | N |
| Ride quality | 60 | 80 | 100 | 110 |
| 0.2 Kg/cm | | | | |
| Air leak | Y | Y | N | N |
| Ride quality | 30 | 50 | 70 | 90 |
| 0.0 Kg.cm | | | | |
| Ride quality | 10 | 30 | 50 | 70 |

In Air leak, "Y" indicates that air leak and/or puncture occurred, and "N" indicates that neither occurred.
Ride quality is indicated by an index based on the assumption that the control wheel quality of ride was 100 when inflated to 0.8kg/

From Table 2 the wheel according to the invention was better than the control wheel both in air-sealing effect and ride quality.

As mentioned above, the present invention, wherein bead seats are provided with humps and an air-sealing means is disposed between the side walls of the rim well, prevents the tyre from coming off the rim when used under low air pressure, and also provides the advantage of a tubeless tyre.

**Claims**

1. A motorcycle tyre and wheel rim assembly comprising a tubeless tyre having a pair of bead regions (19) and a wheel rim (6) having complementary bead seats (4), a rim well (5), between the bead seats (4) and a pair of rim flanges (2) wherein there is provided axially inwards of each bead seat (4) a tyre bead retaining means (3, 17) integral with the wheel rim (6) and a circumferentially extending air sealing means (7) comprising a circular main body of rubber material disposed airtightly between the sidewalls (5a) characterised by the air sealing means (7) including a backing tape (10) positioned radially inwards of the main body, the backing tape comprising material harder than the main body to provide support therefore.

2. A motorcycle tyre and wheel rim according to claim 1 characterised by the air sealing means (7) comprising silicon rubber main body.

3. A motorcycle tyre and wheel rim according to either of claims 1 or 2 characterised by the sidewalls (5a) being at opposite acute angles to the radial direction so that the rim well decreases in width with increasing depth and the sir sealing means (7) also decreases in width in the radially inward direction to provide an effective air seal which is locked in place by the initial air pressure in the tyre and wheel assembly.

4. A motorcycle tyre and wheel rim assembly according to any one of claims 1-3 characterised in that the tyre bead retaining means comprises a tyre bead retaining hump (3) adjacent each bead seat (4).

5. A motorcycle tyre and wheel rim assembly according to claim 3 or 4 characterised in that the retaining means comprises a tyre toe receiving groove (17) and a complementary tyre toe (20) projecting axially and radially inwardly to engage in said groove (17).

6. A motorcycle wheel rim assembly for use in the tyre and wheel rim assembly of any of claims 1 to 5 characterised by a rim well (5) between tyre receiving bead seats (4), the rim well (5) having circumferentially continuous air sealing means (7) disposed airtightly between the side walls (5a) and adjacent each seat (4) and axially inwards thereof tyre bead retaining means (3, 17) forward integrally with the wheel rim (6).

**Patentansprüche**

1. Motorradreifen- und Felgenanordnung, bestehend aus einem schlauchlosen Reifen, der ein Paar von Wulstbereichen (19) hat, und einem Felgenrad (6), das komplementäre Wulstsitze (4) aufweist, einem Felgenbett (5) zwischen den Wulstsitzen (4) und einem Paar von Felgenflanschen (2), worin axial-einwärts von jedem Wulstsitz (4) zwei Reifenwulst-Rückhaltevorrichtungen (3, 17) integriert in die Reifenfelge (6) angebracht sind und einem sich rundum erstreckenden Luftdichtungsmittel (7), bestehend aus einem kreisförmigen Hauptkörper aus Gummimaterial, der luftdicht zwischen Seitenwänden (5a) angebracht ist,
   dadurch **gekennzeichnet,**
   daß das Luftdichtungsmittel (7) ein Stützband (10) einschließt, das radial-einwärts des Hauptkörpers positioniert ist, wobei das Stützband Material beinhaltet, das härter als der Hauptkörper ist, um daher Halt zu geben.

2. Motorradreifen- und Felgenanordnung nach Anspruch 1,
   dadurch **gekennzeichnet,**
   daß die Luftdichtungsmittel (7) Silikongummi-Hauptkörper aufweisen.

EP 0 240 241 B1

**3.** Motorradreifen- und Felgenanordnung nach einem der Ansprüche 1 oder 2,
dadurch **gekennzeichnet,**
daß die Seitenwände (5a) in gegenüberliegenden spitzen Winkeln zur Radialrichtung stehen, so daß das Felgenbett in der Breite mit zunehmender Tiefe abnimmt und das Luftdichtungsmittel (7) ebenfalls in der radialen Einwärtsrichtung in der Breite abnimmt, um eine wirksame Luftabdichtung zu bilden, die an ihrem Sitz durch den ursprünglichen Luftfdruck in der Reifen- und Felgenanordnung verschlossen wird.

**4.** Motorradreifen- und Felgenanordnung nach einem der Ansprüche 1 bis 3,
dadurch **gekennzeichnet,**
daß die Reifenwulst-Rückhaltevorrichtungen einen Reifenwulst-Rückhaltehöcker (3) angrenzend an jeden Wulstsitz umfassen.

**5.** Motorradreifen- und Felgenanordnung nach Anspruch 3 oder 4,
dadurch **gekennzeichnet,**
daß die Rückhaltevorrichtungen aus einer Reifenzehen-aufnehmenden Einkerbung (17) und einer komplementären Reifenzehe (20) bestehen, die axial-einwärts und radial-einwärts hervorsteht, um in diese Einkerbung (17) einzugreifen.

**6.** Motorrad-Radfelgenanordnung zum Gebrauch in der Reifen- und Felgenanordnung nach einem der Ansprüche 1 bis 5,
**gekennzeichnet** durch
ein Felgenbett (5) zwischen reifenaufnehmenden Wulstsitzen (4), wobei das Felgenbett (5) rundum kontinuierlich verlaufende Luftdichtungsmittel (7) aufweist, die luftdicht zwischen den Seitenwänden (5a) angebracht sind und an jedem Sitz (4) angrenzende und davon axial-einwärts, integral mit der Radfelge ausgebildete Reifenwulst-Rückhaltevorrichtungen (3, 17) besitzt.

**Revendications**

**1.** Ensemble de pneumatique et de jante de roue de motocyclette, comprenant un pneumatique sans chambre ayant deux régions de talon (19) et une jante (6) de roue ayant des sièges (4) complémentaires de talon, une cavité (5) de jante formée entre les sièges (4) de talon et deux flasques (2) de jante, dans lequel un dispositif de retenue (3, 17) solidaire de la jante (6) et un dispositif circonférentiel (7) d'étanchéité à l'air comprenant un corps principal circulaire d'un matériau à base de caoutchouc disposé de manière étanche entre les parois latérales (5a) sont disposés axialement vers l'intérieur par rapport à chaque siège de talon (4) du pneumatique, caractérisé en ce que le dispositif (7) d'étanchéité à l'air comporte une bande (10) de support disposée radialement vers l'intérieur du corps principal, la bande de support étant en un matériau plus dur que le corps principal afin qu'elle en assure le support.

**2.** Ensemble selon la revendication 1, caractérisé en ce que le dispositif (7) d'étanchéité à l'air a un corps principal de caoutchouc de silicone.

**3.** Ensemble selon la revendication 1 ou 2, caractérisé en ce que les parois latérales (5a) forment des angles aigus opposés avec la direction radiale si bien que la cavité de la jante a une largeur qui diminue lorsque la profondeur augmente, et le dispositif d'étanchéité à l'air (7) a une aussi une largeur qui diminue dans la direction radiale vers l'intérieur afin qu'il forme un joint efficace à l'air qui est bloqué en position par la pression initiale de l'air dans l'ensemble formé par le pneumatique et la roue.

**4.** Ensemble selon l'une quelconque des revendications 1 à 3, caractérisé en ce que le dispositif de retenue de talon comporte une protubérance (3) de retenue de talon adjacente à chaque siège (4).

**5.** Ensemble selon la revendication 3 ou 4, caractérisé en ce que le dispositif de retenue comporte une gorge (17) de logement d'une pointe de talon et une pointe complémentaire (20) de pneumatique dépassant axialement et radialement vers l'intérieur afin qu'elle soit au contact de la gorge (17).

**6.** Ensemble formant une jante pour roue de motocyclette destiné à être utilisé dans un ensemble selon l'une quelconque des revendications 1 à 5, caractérisé par une cavité (5) de jante placée entre les sièges (4) de talon de pneumatique, la cavité (5) de la jante ayant un dispositif circonférentiel continu

6

(7) d'étanchéité à l'air disposé de manière étanche entre les parois latérales (5a), et un dispositif (3, 17) de retenue de talon de pneumatique solidaire de la jante (6) et placé près de chaque siège (4) et axialement à l'intérieur par rapport au siège.

FIG 1

FIG 2

FIG 3